# EUROPÄISCHE PATENTSCHRIFT

(11) **EP 2 131 117 B1**
(45) Veröffentlichungstag und Bekanntmachung des Hinweises auf die Patenterteilung: **10.02.2016**
(21) Anmeldenummer: 08290514.2
(22) Anmeldetag: 04.06.2008
(51) Int. Cl.: F24H 9/18, H05B 3/50, B60H 1/00, B60H 1/22, F24H 3/04

(54) **Kraftfahrzeugklimaanlage mit PTC-Heizeinrichtung**
Motor vehicle air conditioning with PTC heating device
Climatisation de véhicule automobile dotée d'un dispositif de chauffage ptc

(43) Veröffentlichungstag der Anmeldung: 09.12.2009
(73) Patentinhaber: Mahle Behr France Rouffach S.A.S, 68250 Rouffach (FR)
(72) Erfinder: de Guibert, Matthieu, 68250 Rouffach (FR)
(74) Vertreter: Grauel, Andreas

(56) Entgegenhaltungen:
- EP-A- 1 130 337
- EP-A- 1 370 117
- EP-A- 1 621 826
- EP-A- 1 790 916
- DE-A1- 10 050 429
- DE-A1-102006 032 772

## Beschreibung

Die Erfindung betrifft eine Kraftfahrzeugklimaanlage mit einer elektrischen Heizeinrichtung, insbesondere PTC-Heizeinrichtung, umfassend wenigstens zwei elektrische Heizelemente, insbesondere PTC-Heizelemente, zum Erwärmen der durch die Kraftfahrzeugklimaanlage geleiteten Luft, wenigstens zwei Leitelemente zur Versorgung der wenigstens zwei elektrischen Heizelemente mit elektrischen Strom, die mit den wenigstens zwei elektrischen Heizelementen in elektrischer Verbindung stehen und einen Rahmen, an oder in dem die wenigstens zwei elektrischen Heizelemente und die wenigstens zwei Leitelemente angeordnet sind.

In Kraftfahrzeugklimaanlagen wird die einem Innenraum des Kraftfahrzeuges zuzuführende Luft erwärmt und/oder gekühlt. Hierfür ist die Kraftfahrzeugklimaanlage mit einem Kältemittelverdampfer zum Kühlen der Luft und einem Wärmetauscher zum Erwärmen der Luft durch das von der Abwärme des Verbrennungsmotors erwärmte Kühlwasser versehen. In der Kaltlaufphase des Verbrennungsmotors ist ein Erwärmen der Luft nicht möglich, weil das Kühlwasser noch nicht erwärmt ist. Ferner tritt bei Verbrennungsmotoren mit einem hohen Wirkungsgrad, insbesondere bei Dieselmotoren, wenig Abwärme auf, so dass bei einem hohen Wärmebedarf für die Luft, z. B. bei sehr niedrigen Außentemperaturen, die Abwärme nicht zum Erwärmen der Luft ausreicht. Aus diesem Grund sind Kraftfahrzeugklimaanlagen häufig mit einer PTC-Heizeinrichtung als elektrische Zusatzheizung versehen, um den Wärmetauscher zu unterstützen oder temporär zu ersetzten.

Kraftfahrzeugklimaanlagen werden in verschiedenen Größen gefertigt, so dass es erforderlich ist, auch die PTC-Heizeinrichtungen an diese unterschiedlichen Größen anzupassen.

Aus der DE 10 2006 032 772 A1 ist eine PTC-Stabbaugruppe als elektrische Zusatzheizung für eine Kraftfahrzeugklimaanlage bekannt. An einem Elektrodenanschluss mit mehreren Paaren Durchbrechungen sind PTC-Elemente angeordnet. Wärmestrahlungslamellen-Baugruppen dienen dazu, die von den PTC-Elementen erzeugte Wärme an die Luft abzugeben. Ein Paar Rahmen und ein erstes und zweites Gehäuse dient zur Fixierung der Komponenten. Nachteiligerweise sind zur Herstellung unterschiedlicher Längen der PTC-Stabbaugruppe die Längen der Komponenten der PTC-Stabbaugruppe zu verändern, d. h. es müssen in aufwendiger und kostspieliger Weise verschiedene Komponenten hergestellt werden.

Das Dokument EP 1 370 117 A2 wird als nächstliegender Stand der Technik angesehen und offenbart alle Merkmale der Präambel des Anspruchs 1.

Die Aufgabe der vorliegenden Erfindung besteht deshalb darin, bei Kraftfahrzeugklimaanlagen in einfacher Weise elektrische Heizeinrichtungen in verschiedenen Größen zur Anpassung an unterschiedliche Größen von Kraftfahrzeugklimaanlagen zur Verfügung zu stellen. Die Kraftfahrzeugklimaanlage soll in der Herstellung preiswert sein und eine einfache Montage ermöglichen sowie zuverlässig im Betrieb arbeiten.

Diese Aufgabe wird gelöst mit einer Kraftfahrzeugklimaanlage mit einer elektrischen Heizeinrichtung, insbesondere PTC-Heizeinrichtung, umfassend wenigstens zwei elektrische Heizelemente, insbesondere PTC-Heizelemente, zum Erwärmen der durch die Kraftfahrzeugklimaanlage geleiteten Luft, wenigstens zwei Leitelemente zur Versorgung der wenigstens zwei elektrischen Heizelemente mit elektrischen Strom, die mit den wenigstens zwei elektrischen Heizelementen in elektrischer Verbindung stehen und einen Rahmen, an oder in dem die wenigstens zwei elektrischen Heizelemente und die wenigstens zwei Leitelemente angeordnet sind, wenigstens zwei Module, jeweils mit zwei Wärmeleitlamellen-Baugruppen mit einer Vielzahl an Wärmeleitlamellen, wobei in den wenigstens zwei Modulen jeweils wenigstens ein elektrisches Heizelement und jeweils wenigstens vier Leitelemente angeordnet sind und die wenigstens zwei Module mittels wenigstens eines Verbindungsmittels mechanisch und/oder elektrisch verbindbar sind, so dass aufgrund einer Anordnung einer unterschiedlichen Anzahl an Modulen unterschiedliche Größen und/oder Heizleistungen der elektrischen Heizeinrichtung herstellbar sind, wobei die wenigstens zwei Module identisch sind und das wenigstens eine Verbindungsmittel an den Leitelementen angeordnet ist, dadurch gekennzeichnet, dass zwei Kontaktbleche an der zu dem elektrischen Heizelement abgewandten Seite der beiden Wärmeleitlamellen-Baugruppen positioniert sind, und die wenigstens zwei Leitelemente als Kontaktbleche bzw. als Flächenelemente ausgebildet sind, und mittels des wenigstens einen Verbindungsmittels die als Flächenelemente ausgebildeten Leitelemente in einer gemeinsamen Ebene der Flächenelemente verbindbar sind, so dass unterschiedliche Längen der elektrischen Heizeinrichtung herstellbar sind. Das elektrische Heizelement ist insbesondere ein elektrisches Widerstandsheizelement.

Insbesondere ist mittels des wenigstes einen Verbindungsmittels eine formschlüssige und/oder eine kraftschlüssige Verbindung zwischen den Modulen, insbesondere zwischen den wenigstens zwei Leitelementen, herstellbar.

In einer ergänzenden Ausführungsform ist das wenigstens eine Verbindungsmittel als eine Steck- und Gegensteckverbindung ausgebildet.

Zweckmäßig ist an den wenigstens zwei Leitelementen an einem ersten Ende wenigstens eine Kontaktnase, z. B. ein Kontaktstift oder eine Kontaktlamelle, ausgebildet und an einem zweiten anderem, dem ersten Ende gegenüberliegenden Ende wenigstens eine Ausnehmung, z. B. als Bohrung oder Langloch, ausgebildet, so dass die wenigstens eine Kontaktnase in die wenigstens eine Ausnehmung einführbar ist zur Herstellung einer formschlüssigen und/oder kraftschlüssigen Verbindung zwischen den wenigstens zwei Leitelementen und/oder den wenigstens zwei Modulen.

In einer weiteren Variante ist die wenigstens eine Kontaktnase und/oder die wenigstens eine Kontaktausnehmung einteilig mit dem wenigstens einen Leitelement ausgebildet. Die Kontaktnase bzw. die Kontaktausnehmung kann damit einfach, z. B. mittels Ausstanzen aus dem Leitelement, hergestellt werden.

In einer ergänzenden Ausgestaltung dienen die wenigstens zwei Leitelemente zur Wärmeleitung der von den wenigstens zwei elektrischen Heizelementen erzeugten Wärme. Die Leitelemente haben somit eine thermische und elektrische Funktion, weil sie sowohl zur Leitung von elektrischem Strom als auch zur Leitung von Wärme dienen.

Zweckmäßig ist an wenigstens einem Leitelement und/oder zwischen wenigstens zwei Leitelementen wenigstens eine Wärmeleitlamelle, insbesondere eine Wärmeleitlamellen-Baugruppe, zur Übertragung der von den wenigsten zwei elektrischen Heizelementen erzeugten Wärme auf die durch die Kraftfahrzeugklimaanlage geleitete Luft angeordnet.

In einer ergänzenden Ausgestaltung sind innerhalb des Moduls das wenigstens eine elektrische Heizelement und das wenigstens eine Leitelemente und vorzugsweise die wenigstens eine Wärmeleitlamelle mechanisch, vorzugsweise stoffschlüssig, z. B. mittels Kleben, miteinander verbunden. Die stoffschlüssige Verbindung dient somit zur Verbindung der Komponenten innerhalb des Moduls. Bei der Herstellung der elektrischen Heizeinrichtung können entweder zuerst die Komponenten des Moduls, d. h. das elektrische Heizelement, das Leitelement und fakultativ die Wärmeleitlamelle, stoffschlüssig miteinander verbunden werden und anschließend werden die Module mittels des Verbindungsmittels, insbesondere eine Steck- und Gegensteckverbindung, an den Leitelementen miteinander verbunden. Abweichend hiervon können auch zuerst die Leitelemente mit dem Verbindungsmittel verbunden und anschließend die stoffschlüssige Verbindung der Komponenten des Moduls hergestellt werden. Diese beiden Möglichkeiten der Herstellung können auch miteinander kombiniert werden. Abschließend wird der Rahmen, z. B. stoff- und/oder kraft- und/oder formschlüssig, befestigt.

In einer weiteren Variante sind mittels der stoffschlüssigen Verbindung das wenigstens eine elektrische Heizelement und das wenigstens eine Leitelement und vorzugsweise die wenigstens eine Wärmeleitlamelle in einer Richtung senkrecht zur gemeinsamen Ebene des wenigstens einen Leitelements verbindbar.

Zweckmäßig ist ein Rahmen für die elektrische Heizeinrichtung zweiteilig mit einem Unterteil und einem Oberteil, in dem vorzugsweise elektrische Kontaktelemente integriert sind, ausgebildet.

In einer weiteren Ausgestaltung ist der Rahmen für die elektrische Heizeinrichtung aus Rahmenmodulen aufgebaut, die miteinander verbindbar sind zur Anpassung an eine unterschiedliche Anzahl an Modulen. Der Rahmen, insbesondere das Unterteil des Rahmens, ist somit mehrteilig aus Rahmenmodulen zusammengesetzt. Zur Anpassung an eine unterschiedliche Anzahl an Modulen wird in analoger Weise die entsprechend notwenige Anzahl an Rahmenmodulen verwendet.

In einer zusätzlichen Variante ist die stoffschlüssige Verbindung dahingehend ausgebildet, dass die Verbindung ausreichend stromleitend zur Versorgung des wenigstens einen elektrischen Heizelementes mit elektrischen Strom und/oder ausreichend wärmeleitend zur Erwärmung der durch die Kraftfahrzeugklimaanlage geleiteten Luft ist.

In einer zusätzlichen Ausführungsform ist aufgrund der Dicke der stoffschlüssigen Verbindung die Verbindung ausreichend stromleitend zur Versorgung des wenigstens eines elektrischen Heizelements mit elektrischen Strom und/oder ausreichend wärmeleitend zur Erwärmung der durch die Kraftfahrzeugklimaanlage geleiteten Luft.

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage mit einer PTC-Heizeinrichtung,
- Fig. 2: einen Querschnitt der PTC-Heizeinrichtung gemäß Fig. 1,
- Fig. 3: eine perspektivische Ansicht von Komponenten der PTC-Heizeinrichtung gemäß Fig. 2 und
- Fig. 4: eine vergrößerte Teilansicht eines Endes eines Kontaktbleches gemäß Fig. 3, die in Fig. 3 mit einem Kreis versehen ist.

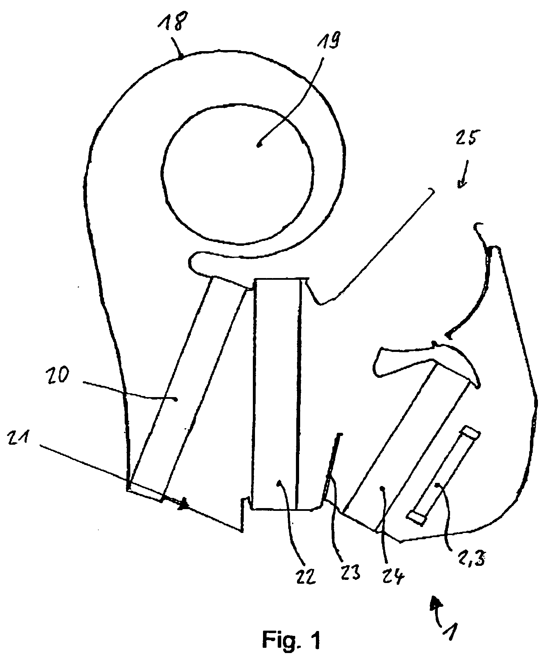

Fig. 1 zeigt eine Kraftfahrzeugklimaanlage 1. In einem Klimaanlagengehäuse 18 mit einer Bodenwandung 21, einer Prallwand 23 und einer Austrittsöffnung 25 ist ein Gebläse 19, ein Filter 20, ein Kältemittelverdampfer 22 und eine als PTC-Heizeinrichtung 3 (PTC=positive temperature coefficient) ausgebildete elektrische Heizeinrichtung 2 angeordnet. Die Luft für den Innenraum eines Kraftfahrzeuges wird mittels des Gebläses 19 durch den Filter 20, den Kältemittelverdampfer 22 und den von Kühlwasser eines Verbrennungsmotors durchströmten Wärmetauscher 24 sowie die PTC-Heizeinrichtung 3 geleitet.

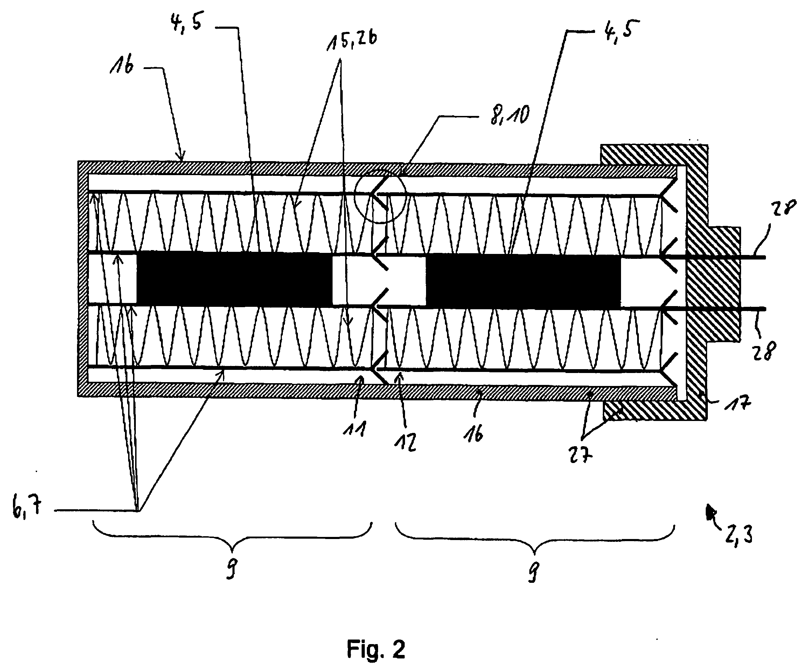

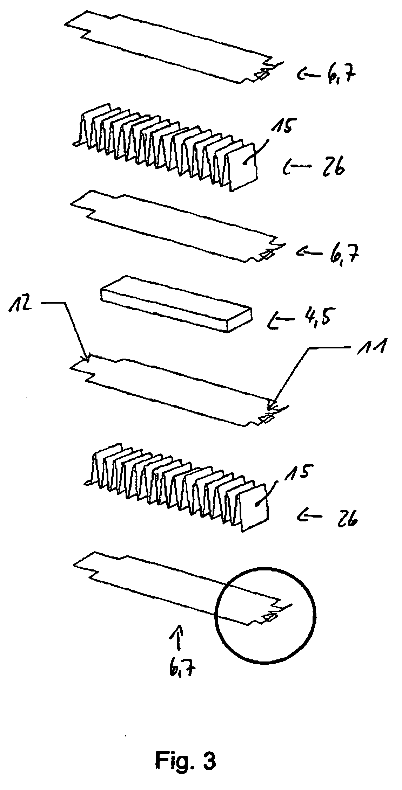

Die in Fig. 2 dargestellte PTC-Heizeinrichtung 2 umfasst zwei identische Module 9 mit je einem blockartigen PTC-Heizelemente 5, vier als Kontaktbleche 7 ausgebildete Leitelemente 6 und zwei Wärmeleitlamellen-Baugruppen 26 mit einer Vielzahl an Wärmeleitlamellen 15 (Fig. 2 und 3). Oberhalb und unterhalb des PTC-Heizelements 5 ist das Kontaktblech 7 angeordnet. Die Kontaktbleche 7 sind als Flächenelemente mit einer im Wesentlichen zweidimensionalen Geometrie ausgebildet. Beide Kontaktbleche 7 an dem PTC-Heizelement 5 versorgen das PTC-Heizelement 5 mit elektrischen Strom und leiten die von dem PTC-Heizelement 5 erzeugte Wärme zu den an den beiden Kontaktblechen 7 angeordneten Wärmleitlamellen-Baugruppen 26, welche die Wärme, neben dem PTC-Heizelement 5 und den Kontaktblechen 7, an die Luft abgeben. Aufgrund der mechanischen Verbindung zwischen den beiden Kontaktblechen 7 und dem PTC-Heizelement 5 wird das PTC-Heizelement 5 in dem Modul 9 auch von den Kontaktblechen 7 befestigt bzw. fixiert. An den beiden Wärmeleitlamellen-Baugruppen 26 sind jeweils an der zu dem PTC-Heizelement 5 abgewandten Seite je ein weiteres Kontaktblech 7 positioniert. Innerhalb eines Moduls 9 und in der Darstellung in Fig. 2 in vertikaler Richtung sind die vier Kontaktbleche 7, die beiden Wärmeleitlamellen-Baugruppen 26 und das PTC-Heizelement 5 stoffschlüssig mittels Kleben miteinander verbunden. Bei der Herstellung der Klebeverbindung werden die Komponenten 5, 7, 27 zusammengepresst, so dass eine dünne Schicht bzw. ein Film aus Klebstoff zwischen den Komponenten 5, 7, 27 vorhanden ist. Dadurch kann das PTC-Heizelement 5 ausreichend mit elektrischen Strom versorgt werden und die Wärmeleitung zwischen den Komponenten 5, 7, 27 ist nur geringfügig durch den Klebstoff eingeschränkt zur ausreichenden Erwärmung der Luft. Innerhalb eines Moduls 9 können in analoger Weise weitere PTC-Heizelemente 5, Kontaktbleche 7 und Wärmeleitlamellen-Baugruppen 26 angeordnet werden (nicht dargestellt).

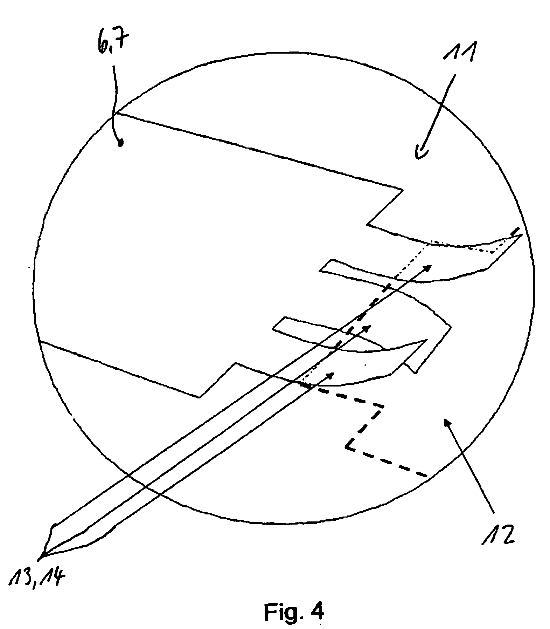

Die beiden Module 9 sind mittels einer Steck- und Gegensteckverbindung 10 miteinander verbunden (Fig. 2). In Fig. 2 ist die Steck- und Gegensteckver bindung 10 nur symbolisch dargestellt, welche an den Kontaktblechen 7 ausgebildet ist. Ein erstes Ende 11 des Kontaktbleches 7 verfügt über drei Kontaktlamellen 14 als Kontaktnasen 13 (Fig. 3 und 4). Die geometrische Anordnung der Kontaktlamellen 14 ist aus Fig. 4 ersichtlich. Die Kontaktlamellen 14 werden aus dem Kontaktblech 7 heraus gestanzt, so dass die Kontaktlamellen 14 und das Kontaktblech 7 einteilig sind. An dem zweiten Ende 12 des Kontaktbleches 7 sind mit einer komplementären Geometrie zu den Kontaktlamellen 14 drei Langlöcher als Ausnehmungen ausgebildet (nicht dargestellt). In Fig. 4 ist das zweite Ende 12 des Kontaktbleches 7 strichliert dargestellt. Zur Verbindung der beiden Module 9 sind die Kontaktlamellen 14 der Kontaktbleche 7 des linken Moduls 9 in Fig. 2 in die Langlöcher der Kontaktbleche 7 des rechten Moduls 9 in Fig. 2 einzuführen. Dadurch wird eine formschlüssige Verbindung zwischen den Kontaktblechen 7 des linken und rechten Moduls 9 hergestellt. Die Kontaktbleche 7 und damit auch die beiden Module 9 sind somit mechanisch miteinander verbunden. Die Kontaktbleche 7 sind aus elektrisch leitendem Metall, z. B. Kupfer oder Eisen, gefertigt, so dass auch eine elektrische Verbindung zwischen den Kontaktblechen 7 aufgrund des unmittelbaren Kontaktes an der Steck- und Gegensteckverbindung 10 besteht. In dieser Weise können auch drei, vier oder eine beliebige Anzahl von Modulen 9 miteinander verbunden werden (nicht dargestellt).

Die PTC-Heizelemente 5, z. B. aus Keramik, weisen eine elektrische Leistung P zwischen 30 W und 150 W, vorzugsweise zwischen 50 W und 100 W, insbesondere zwischen 60 W und 80 W auf. Die Anordnung von N identischen Modulen 9 zu bzw. in der PTC-Heizeinrichtung 3 hat somit die elektrische Gesamtleistung der PTC-Heizeinrichtung 3 von N * P zur Folge.

Die Komponenten 5, 7, 26 der elektrischen Heizeinrichtung 2 sind von einem Unterteil 16 und einem Oberteil 17 eines Rahmens 27 aus Kunststoff umgeben. In dem Oberteil 17 sind zwei elektrische Kontaktelemente 28 integriert. Die elektrischen Kontaktelemente 28 weisen am äußeren Ende freie Kontaktflächen zur Kontaktierung mit elektrischen Leitungen (nicht dargestellt) auf. Am inneren Ende sind die elektrischen Kontaktelemente 28 wie ein zweites Ende 12 des Kontaktbleches 7 ausgebildet, so dass die Kontaktlamellen 14 der beiden Kontaktbleche 7 des in Fig. 2 rechts dargestellten Moduls 9 eine Steck- und Gegensteckverbindung 10 mit den beiden elektrischen Kontaktelementen 28 bilden können.

Insgesamt betrachtet sind mit der erfindungsgemäßen Kraftfahrzeugklimaanlage 1 wesentliche Vorteile verbunden. Die in die Kraftfahrzeugklimaanlage 1 eingebaute elektrische Heizeinrichtung 2 ist modulartig aufgebaut, so dass eine aufwendige Adaptierung der elektrischen Heizeinrichtung 2 an unterschiedliche Größen oder notwendige elektrische Heizleistungen nicht mehr erforderlich ist. Dadurch werden weniger Teile benötigt und die Kosten für unterschiedliche Werkzeuge zur Herstellung der Teile können eingespart werden. Ferner wird die Montage kostengünstiger, weil weniger unterschiedliche Teile erforderlich sind. Die modulartige Anordnung von PTC-Heizelementen 5 in einer elektrischen Heizeinrichtung 2 gestattet die flexible, preiswerte und einfache Anpassung der elektrischen Heizeinrichtung 2 hinsichtlich der Größe und/oder der erforderlichen elektrischen Leistung für die Kraftfahrzeugklimaanlage 1.

### Bezugszeichenliste

- 1: Kraftfahrzeugklimaanlage
- 2: Elektrische Heizeinrichtung
- 3: PTC-Heizeinrichtung
- 4: Elektrisches Heizelement
- 5: PTC-Heizelement
- 6: Leitelement
- 7: Kontaktblech
- 8: Verbindungsmittel
- 9: Modul
- 10: Steck- und Gegensteckverbindung
- 11: Erstes Ende des Kontaktbleches
- 12: Zweites Endes des Kontaktbleches
- 13: Kontaktnase
- 14: Kontaktlamelle
- 15: Wämeleitlamelle
- 16: Unterteil des Rahmens
- 17: Oberteil des Rahmens
- 18: Klimaanlagengehäuse
- 19: Gebläse
- 20: Filter
- 21: Bodenwandung der Kraftfahrzeugklimaanlage
- 22: Kältemittelverdampfer
- 23: Prallwand
- 24: Wärmetauscher
- 25: Austrittsöffnung
- 26: Wämeleitlamellen-Baugruppe
- 27: Rahmen
- 28: Elektrische Kontaktelemente

## Patentansprüche

1. Kraftfahrzeugklimaanlage (1) mit einer elektrischen Heizeinrichtung (2), insbesondere PTC-Heizeinrichtung (3), umfassend
- wenigstens zwei elektrische Heizelemente (4), insbesondere PTC-Heizelemente (5), zum Erwärmen der durch die Kraftfahrzeugklimaanlage (1) geleiteten Luft,
- wenigstens zwei Leitelemente (6) zur Versorgung der wenigstens zwei elektrischen Heizelemente (4) mit elektrischem Strom, die mit den wenigstens zwei elektrischen Heizelementen (4) in elektrischer Verbindung stehen und
- einen Rahmen (27), an oder in dem die wenigstens zwei elektrischen Heizelemente (4) und die wenigstens zwei Leitelemente (6) angeordnet sind,
- wenigstens zwei Module (9), jeweils mit zwei Wärmeleitlamellen-Baugruppen (26) mit einer Vielzahl an Wärmeleitlamellen (15),
wobei
in den wenigstens zwei Modulen (9) jeweils wenigstens ein elektrisches Heizelement (4) und jeweils wenigstens vier Leitelemente (6) angeordnet sind und die wenigstens zwei Module (9) mittels wenigstens eines Verbindungsmittels (8) mechanisch und/oder elektrisch verbindbar sind, so dass aufgrund einer Anordnung einer unterschiedlichen Anzahl an Modulen (9) unterschiedliche Größen und/oder Heizleistungen der elektrischen Heizeinrichtung (2) herstellbar sind,
wobei die wenigstens zwei Module (9) identisch sind und das wenigstens eine Verbindungsmittel (8) an den Leitelementen (6) angeordnet ist, **dadurch gekennzeichnet, dass** zwei Kontaktbleche (7) an der zu dem elektrischen Heizelement abgewandten Seite der beiden Wärmeleitlamellen-Baugruppen (26) positioniert sind, und
die Leitelemente (6) als Kontaktbleche (7) bzw. als Flächenelemente ausgebildet sind,
und mittels des wenigstens einen Verbindungsmittels (8) die als Flächenelemente ausgebildeten Leitelemente (6) in einer gemeinsamen Ebene der Flächenelemente verbindbar sind, so dass unterschiedliche Längen der elektrischen Heizeinrichtung (2) herstellbar sind.

2. Kraftfahrzeugklimaanlage nach Anspruch 1, **dadurch gekennzeichnet, dass** mittels des wenigstes einen Verbindungsmittels (8) eine formschlüssige und/oder eine kraftschlüssige Verbindung zwischen den Modulen (9), insbesondere zwischen den wenigstens zwei Leitelementen (6), herstellbar ist.

3. Kraftfahrzeugklimaanlage nach Anspruch 1 oder 2, **dadurch gekennzeichnet, dass** das wenigstens eine Verbindungsmittel (8) als eine Steck- und Gegensteckverbindung (10) ausgebildet ist.

4. Kraftfahrzeugklimaanlage nach Anspruch 3, **dadurch gekennzeichnet, dass** an den wenigstens zwei Leitelementen (6) an einem ersten Ende (11) wenigstens eine Kontaktnase (13), z. B. ein Kontaktstift oder eine Kontaktlamelle (14), ausgebildet ist und an einem zweiten, dem ersten Ende (11) gegenüberliegenden Ende (12) wenigstens eine Ausnehmung, z. B. als Bohrung oder Langloch, ausgebildet, so dass die wenigstens eine Kontaktnase (13) in die wenigstens eine Ausnehmung einführbar ist zur Herstellung einer formschlüssigen und/oder kraftschlüssigen Verbindung zwischen den wenigstens zwei Leitelementen (6) und/oder den wenigstens zwei Modulen (9).

5. Kraftfahrzeugklimaanlage nach Anspruch 4, **dadurch gekennzeichnet, dass** die wenigstens eine Kontaktnase (13) und/oder die wenigstens eine Kontaktausnehmung einteilig mit dem wenigstens einen Leitelement (6) ausgebildet ist.

6. Kraftfahrzeugklimaanlage nach einem der vorhergehenden Ansprüche, **dadurch gekennzeichnet, dass** die wenigstens zwei Leitelemente (6) zur Wärmeleitung der von den wenigstens zwei elektrischen Heizelementen (4) erzeugten Wärme dienen.

7. Kraftfahrzeugklimaanlage nach einem der vorhergehenden Ansprüche, **dadurch gekennzeichnet, dass** an wenigstens einem Leitelement (6) und/oder zwischen wenigstens zwei Leitelementen (6) wenigstens eine Wärmeleitlamelle (15), insbesondere eine Wärmeleitlamellen-Baugruppe (26), zur Übertragung der von den wenigsten zwei elektrischen Heizelementen (4) erzeugten Wärme auf die durch die Kraftfahrzeugklimaanlage (1) geleitete Luft angeordnet ist.

8. Kraftfahrzeugklimaanlage nach einem der vorhergehenden Ansprüche, **dadurch gekennzeichnet, dass** innerhalb des Moduls (9) das wenigstens eine elektrische Heizelement (4) und das wenigstens eine Leitelemente (6) und vorzugsweise die wenigstens eine Wärmeleitlamelle (15) mechanisch, vorzugsweise stoffschlüssig, z. B. mittels Kleben, miteinander verbunden sind.

9. Kraftfahrzeugklimaanlage nach Anspruch 8, **dadurch gekennzeichnet, dass** mittels der stoffschlüssigen Verbindung das wenigstens eine elektrische Heizelement (4) und das wenigstens eine Leitelement (6) und vorzugsweise die wenigstens eine Wärmeleitlamelle (15) in einer Richtung senkrecht zu einer gemeinsamen Ebene des wenigstens einen Leitelements (6) verbindbar sind.

10. Kraftfahrzeugklimaanlage nach einem der vorhergehenden Ansprüche, **dadurch gekennzeichnet, dass** ein Rahmen (27) für die elektrische Heizeinrichtung (2) zweiteilig mit einem Unterteil (16) und einem Oberteil (17), in dem vorzugsweise elektrische Kontaktelemente (28) integriert sind, ausgebildet ist.

11. Kraftfahrzeug mit Kraftfahrzeugklinaanlage nach einem der vorhergehenden Ansprüche, **dadurch gekennzeichnet, dass** der Rahmen (27) für die elektrische Heizeinrichtung (2) aus Rahmenmodulen aufgebaut ist, die miteinander verbindbar sind, zur Anpassung an eine unterschiedliche Anzahl an Modulen (9).

## Claims

1. A motor vehicle air conditioning system (1) with an electric heating device (2), in particular PTC heating device (3), comprising
- at least two electric heating elements (4), in particular PTC heating elements (5), for heating the air directed through the motor vehicle air conditioning system(1),
- at least two conductive elements (6), which are in electric communication with the at least two electric heating elements (4), for supplying the at least two electric heating elements (4) with electric current and
- one frame (27) on or in which the at least two electric heating elements (4) and the at least two conductive elements (6) are arranged,
- at least two modules (9), each having two heat conducting lamella units (26) with a plurality of heat conducting lamellas (15),
wherein
at least one electric heating element (4) and at least four conductive elements (6) are arranged in each of the at least two modules (9) and the at least two modules (9) can be mechanically and/or electrically connected by means of at least one connection means (8), thereby enabling the production of different sizes and/or heat outputs of the electric heating device (2) due to an arrangement of a differing number of modules (9),
wherein the at least two modules (9) are identical and the at least one connection means (8) is arranged on the conductive elements (6), **characterised in that** two contact plates (7) are positioned on the side of the two heat conducting lamella units (26) facing away from the electric heating element, and
the conductive elements (6) are designed as contact plates (7) or as area elements,
and **in that** the conductive elements (6) formed as area elements can be connected in a common plane of the area elements by means of the at least one connection means (8), thereby enabling the production of different lengths of the electric heating device (2).

2. The motor vehicle air conditioning system according to claim 1, **characterised in that** a positive and/or a non-positive connection between the modules (9), in particular between the at least two conductive elements (6), can be produced by means of the at least one connection means (8).

3. The motor vehicle air conditioning system according to claim 1 or 2, **characterised in that** the at least one connection means (8) is formed as a plug and counter-plug connection (10).

4. The motor vehicle air conditioning system according to claim 3, **characterised in that** at a first end (11) of the at least two conductive elements (6) at least one contact lug (13), e.g. a contact pin or a contact lamella (14), is formed and at a second end (12) opposite the first end (11) at least one recess, e.g. a borehole or slotted hole, is formed, so that the at least one contact lug (13) can be inserted into the at least one recess in order to produce a positive and/or non-positive connection between the at least two conductive elements (6) and/or the at least two modules (9).

5. The motor vehicle air conditioning system according to claim 4, **characterised in that** the at least one contact lug (13) and/or the at least one contact recess is formed as one part with the at least one conductive element (6).

6. The motor vehicle air conditioning system according to one of the preceding claims, **characterised in that** the at least two conductive elements (6) serve to conduct the heat produced by the at least two electric heating elements (4).

7. The motor vehicle air conditioning system according to one of the preceding claims, **characterised in that** at least one heat conducting lamella (15), in particular a heat conducting lamella unit (26), is arranged on at least one conductive element (6) and/or between at least two conductive elements (6) in order to transfer the heat produced by the at least two electric heating elements (4) to the air directed through the motor vehicle air conditioning system (1).

8. The motor vehicle air conditioning system according to one of the preceding claims, **characterised in that** within the module (9), the at least one electric heating element (4) and the at least one conductive element (6) and preferably the at least one heat conducting lamella (15) are mechanically, preferably cohesively connected with one another, e.g. by means of adhesives.

9. The motor vehicle air conditioning system according to claim 8, **characterised in that** the at least one electric heating element (4) and the at least one conductive element (6) and preferably the at least one heat conducting lamella (15) can be connected in a direction perpendicular to a common plane of the at least one conductive element (6) by means of the cohesive connection.

10. The motor vehicle air conditioning system according to one of the preceding claims, **characterised in that** a frame (27) for the electric heating device (2) is formed in two parts consisting of a lower part (16) and an upper part (17) in which preferably electrical contact elements (28) are integrated.

11. A vehicle with the motor vehicle air conditioning system according to one of the preceding claims, **characterised in that** the frame (27) for the electric heating device (2) is built from frame modules which can be connected with one another for adaption to a differing number of modules (9).

## Revendications

1. Système de climatisation d'un véhicule automobile (1), comprenant un dispositif de chauffage électrique (2), en particulier un dispositif de chauffage (3) de type CTP, comportant :
- au moins deux éléments chauffants électriques (4), en particulier des éléments chauffants CTP (5), servant au chauffage de l'air dirigé à travers le système de climatisation d'un véhicule automobile (1),
- au moins deux éléments conducteurs (6) servant à l'alimentation en courant électrique des éléments chauffants électriques (4) au moins au nombre de deux, éléments conducteurs qui sont en liaison électrique avec les éléments chauffants électriques (4) au moins au nombre de deux, et
- un cadre (27) sur lequel ou dans lequel sont disposés les éléments chauffants électriques (4) au moins au nombre de deux et les éléments conducteurs (6) au moins au nombre de deux,
- au moins deux modules (9) comprenant à chaque fois deux groupes (26) de lamelles conductrices de la chaleur, ces groupes comportant une multiplicité de lamelles conductrices de la chaleur (15),
où sont disposés, dans les modules (9) au moins au nombre de deux, à chaque fois au moins un élément chauffant électrique (4) et à chaque fois au moins quatre éléments conducteurs (6), et les modules (9) au moins au nombre de deux peuvent être assemblés mécaniquement et / ou électriquement au moyen au moins d'un élément de connexion (8), de sorte qu'en raison d'un agencement d'un nombre variable de modules (9), différentes tailles et / ou puissances de chauffage du dispositif de chauffage électrique (2) peuvent être produites,
où les modules (9) au moins au nombre de deux sont identiques et le moyen de connexion (8) au moins au nombre de un est disposé sur les éléments conducteurs (6),
**caractérisé en ce que**
deux tôles de contact (7) sont positionnées sur le côté des deux groupes (26) de lamelles conductrices de la chaleur, ledit côté étant placé à l'opposé de l'élément chauffant électrique,
et les éléments conducteurs (6) sont conçus comme des tôles de contact (7) ou comme des éléments de surface,
et les éléments conducteurs (6) conçus comme des éléments de surface peuvent être assemblés à l'aide du moyen de connexion (8) au moins au nombre de un, dans un plan commun des éléments de surface, de sorte que différentes longueurs du dispositif de chauffage électrique (2) sont réalisables.

2. Système de climatisation d'un véhicule automobile selon la revendication 1, **caractérisé en ce qu'**un assemblage obtenu par complémentarité de forme et / ou par action de force, entre les modules (9), en particulier entre les éléments conducteurs (6) au moins au nombre de deux, est réalisable à l'aide du moyen de connexion (8) au moins au nombre de un.

3. Système de climatisation d'un véhicule automobile selon la revendication 1 ou 2, **caractérisé en ce que** le moyen de connexion (8) au moins au nombre de un est conçu comme un connecteur mâle et femelle (10).

4. Système de climatisation d'un véhicule automobile selon la revendication 3, **caractérisé en ce qu'**au moins un taquet de contact (13), par exemple une fiche de contact ou une lamelle de contact (14), est configuré(e) sur les éléments conducteurs (6) au moins au nombre de deux, au niveau d'une première extrémité (11), et, au niveau d'une seconde extrémité (12) opposée à la première extrémité (11), est configuré au moins un creux, par exemple formé comme un perçage ou comme un trou oblong, de sorte que le taquet de contact (13) au moins au nombre de un peut être introduit dans le creux au moins au nombre de un, afin de réaliser un assemblage obtenu par complémentarité de forme et / ou par action de force entre les éléments conducteurs (6) au moins au nombre de deux et / ou entre les modules (9) au moins au nombre de deux.

5. Système de climatisation d'un véhicule automobile selon la revendication 4, **caractérisé en ce que** le taquet de contact (13) au moins au nombre de un et / ou le creux de contact au moins au nombre de un est configuré d'un seul tenant avec l'élément conducteur (6) au moins au nombre de un.

6. Système de climatisation d'un véhicule automobile selon l'une quelconque des revendications précédentes, **caractérisé en ce que** les éléments conducteurs (6) au moins au nombre de deux servent à la conduction de la chaleur produite par les éléments chauffants électriques (4) au moins au nombre de deux.

7. Système de climatisation d'un véhicule automobile selon l'une quelconque des revendications précédentes, **caractérisé en ce qu'**au moins une lamelle conductrice de la chaleur (15), en particulier un groupe (26) de lamelles conductrices de la chaleur, est disposé(e) sur au moins un élément conducteur (6) et / ou entre au moins deux éléments conducteurs (6), pour la transmission, à l'air dirigé à travers le système de climatisation (1) du véhicule automobile, de la chaleur produite par les éléments chauffants électriques (4) au moins au nombre de deux.

8. Système de climatisation d'un véhicule automobile selon l'une quelconque des revendications précédentes, **caractérisé en ce que**, à l'intérieur du module (9), l'élément chauffant électrique (4) au moins au nombre de un et l'élément conducteur (6) au moins au nombre de un et, de préférence, la lamelle conductrice de la chaleur (15) au moins au nombre de un, sont assemblés les uns aux autres mécaniquement, de préférence par continuité de matière, par exemple par collage.

9. Système de climatisation d'un véhicule automobile selon la revendication 8, **caractérisé en ce que** l'élément chauffant électrique (4) au moins au nombre de un et l'élément conducteur (6) au moins au nombre de un et, de préférence, la lamelle conductrice de la chaleur (15) au moins au nombre de un, peuvent être assemblés, au moyen de l'assemblage obtenu par continuité de matière, suivant une direction perpendiculaire à un plan commun de l'élément conducteur (6) au moins au nombre de un.

10. Système de climatisation d'un véhicule automobile selon l'une quelconque des revendications précédentes, **caractérisé en ce qu'**un cadre (27) conçu pour le dispositif de chauffage électrique (2) est réalisé en deux parties, en comprenant une partie inférieure (16) et une partie supérieure (17) dans laquelle sont intégrés de préférence des éléments de contact électriques (28).

11. Véhicule automobile comprenant un système de climatisation selon l'une quelconque des revendications précédentes, **caractérisé en ce que** le cadre (27) conçu pour le dispositif de chauffage électrique (2) est constitué de modules de cadre qui peuvent être assemblés les uns aux autres, pour l'adaptation à un nombre variable de modules (9).
